# EUROPEAN PATENT SPECIFICATION

(11) **EP 1 634 042 B1**
(45) Date of publication and mention of the grant of the patent: **15.08.2007**
(21) Application number: 04754701.3
(22) Date of filing: 07.06.2004
(51) Int. Cl.: G01G 19/414

(54) **METHOD FOR TRACKING THE STATE OF A SHELF SYSTEM**
VERFAHREN ZUM VERFOLGEN DES ZUSTANDS EINES REGAL-SYSTEMS
PROCEDE DE SUIVI D'ETAT D'UN SYSTEME DE PLATEAU

(30) Priority: 13.06.2003 US 478179 P; 30.10.2003 US 696582
(43) Date of publication of application: 15.03.2006
(73) Proprietor: SAP AG, 69190 Walldorf (DE)
(72) Inventor: KUBACH, Uwe, 76337 Waldbronn (DE); REDDING, Guy, East Victoria Park 6101 (AU); SCHAPER, Joachim, 76829 Landau (DE)
(74) Representative: Müller-Boré & Partner Patentanwälte
(86) International application number: PCT/US2004/018170
(87) International publication number: WO 2004/113851

(56) References cited:
- WO-A-02/25230
- GB-A- 2 204 417
- US-A- 5 986 219
- US-A1- 2001 034 671
- US-A1- 2003 047 387
- PATENT ABSTRACTS OF JAPAN vol. 0070, no. 02 (P-166), 7 January 1983 (1983-01-07) & JP 57 163826 A (NIPPON DENKI KK), 8 October 1982 (1982-10-08)

## Description

### TECHNICAL FIELD

This invention relates to techniques for tracking a state of a stored item.

### BACKGROUND

Product is often stored in warehousing areas prior to being shipped to consumers and end-users. Often, this product is stored on pallets, shelves, and tables, and in bins and storage containers (i.e., temporary storage areas). As orders are assembled from the product stored in the warehousing area, individual items are removed from these temporary storage areas. Further, as the product within the warehousing area is replenished, items are added to these temporary storage areas.

Due to the constant change in the number of items stored in the temporary storage areas, tracking and maintaining accurate inventory information about the product may be difficult. This, in turn, may complicate the product replenishment process.

In document US 2003/0047387 A1 a system is disclosed which tracks items in the checkout area of a self checkout terminal. The system includes a plurality of load sensors for sensing a distributed weight of an item placed in a checkout area and an item locator coupled to the plurality of weight sensors for determining a location for the item from the distributed weight as sensed by the sensors. The item locator identifies a location for an item from the weight differentials sensed at the weight sensors in response to movement of an item within the checkout area. The weight distribution and location data may be correlated to the item identifier for a scanned item so that items in the checkout area may be tracked.

Document US 5,986,219 discloses a liquor inventorying method for determining the amount of liquor dispensed during a shift in a restaurant or bar. The method is implemented with the aid of a weigh scale wherein the liquor bottles are separated in a plurality of categories and by weighing all of the bottles in a category in groups after a shift to determine how much liquor was dispensed from the category.

Document WO 02/25230 A1 is related to a logistics scales having a number of shelves having a shelf board which is supported by hooks. The hooks are provided with force sensors. The weights of individual containers and the positions on the shelf can be determined by suitable algebraic combination of the measuring results of the two force sensors.

Document GB 2204417A is related to a mini-bar which is coupled with a scales to automatically detect a change in weight of the mini-bar. The change in weight is detected and the nature of the item which has been removed is identified such that the customer can be automatically charged.

### SUMMARY

In one general aspect, a method of monitoring a load includes monitoring an initial state output signal and a current state output signal generated by one or more load sensors positioned about a load storage device (e.g., a pallet, a shelf, a table, a bin, or a shipping container). The initial and current state output signals are compared to determine changes in the load positioned upon the load storage device.

Implementations may include one or more of the following features. The load storage device may be generally rectangular in shape, and one load sensor may be positioned proximate each corner of the load storage device. One or more of the load sensors may be positioned between the load storage device and the surface upon which the load storage device rests, or between the load storage device and the load positioned upon the load storage device.

The initial state may be an empty state in which the load storage device does not contain a load, or a loaded state in which the load storage device contains a load. The current state may be a loaded state in which the load storage device contains a load, or an empty state in which the load storage device does not contain a load.

An empty state model may be established for the load storage device during an empty state in which the load storage device does not contain a load. The empty state model may be modified to generate a current state model pursuant to changes in the load positioned upon the load storage device. The current state model may define the load positioned upon the load storage device during a loaded state.

An item database may be maintained that includes a definition for one or more items potentially included in the load positioned upon the load storage device. The definition of each item may include one or more parameters that define the item, such as item name, item part number, product quantity per item, item weight, item height, item width, and item depth. One or more items may be added to the empty state model. The current state model may be updated pursuant to changes in the load positioned upon the load storage device. For example, one or more items may be added to or removed from the current state model.

A net load change in the load positioned upon the load storage device may be determined. The determined net load change may be compared to the item weight of each of the one or more items potentially included in the load. A chosen item that corresponds to the determined net load change may be selected from the one or more items potentially included in the load.

The determined net load change may be a net load increase and the chosen item may be an item added to the load positioned upon the load storage device. A state model may be updated to include the chosen item.

The determined net load change may be a net load reduction and the chosen item may be an item removed from the load positioned upon the load storage device. A state model may be updated to remove the chosen item.

A current state model may be established for the load storage device during a loaded state in which the load storage device contains a load. The current state model may be updated pursuant to changes in the load positioned upon the load storage device. One or more discrete packages may be added to or removed from the current state model.

The above-described method may also be implemented as a sequence of instructions executed by a processor.

According to another aspect, a system includes a plurality of load sensors positioned to measure a load on a surface and operable to output load signals corresponding to the load, a database operable to store a plurality of load records, each load record corresponding to an item type, and a load monitoring system operable to input the load signals and access the database, to thereby output the item type corresponding to the load, based on the load records.

Implementations may include one or more of the following features. For example, the load monitoring system may be further operable to determine a position of the load, relative to the surface, based on the load signals. The load monitoring system may be further operable to monitor an initial state output signal generated by the load sensors, monitor a current state output signal generated by the load sensors, and compare the initial and current state output signals to determine changes in the load.

The load monitoring system may be further operable to recognize an event associated with the load, including an addition to, removal from, or movement on the surface of the load. The load monitoring system may be further operable to determine dimensions of the load.

The above-described implementations can provide one or more of the following advantages. The status of load storage devices may be quickly and easily monitored. Further, this monitoring may be performed from remote locations. By monitoring the status of a load storage device, reordering and replenishment may be automated and simplified. Additionally, the inventorying of the product stored on the load storage devices may be streamlined.

The details of one or more implementations are set forth in the accompanying drawings and the description below. Other features and advantages will become apparent from the description, the drawings, and the claims.

### DESCRIPTION OF DRAWINGS

FIG. 1 is a block diagram of a load monitoring system;
FIG 2 is a more detailed view of the load monitoring system of FIG. 1;
FIG. 3 is a flow diagram of a configuration module of the load monitoring system of FIG 1;
FIG. 4 is a flow diagram of an event monitoring module of the load monitoring system of FIG. 1;
FIG 5 is a flow diagram of an event analysis module of the load monitoring system of FIG. 1; and
FIG. 6 is a top view of a load storage device.

### DETAILED DESCRIPTION

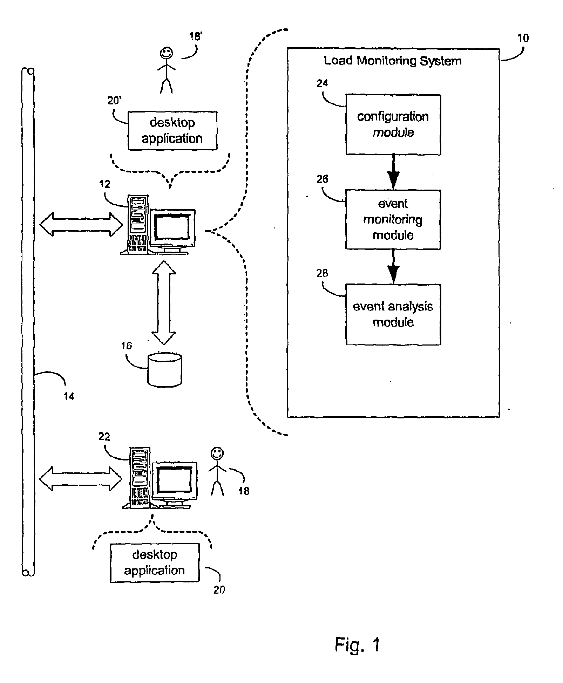

FIG. 1 shows a load monitoring system 10 that allows a user and/or an inventory system to monitor information including the state of a load positioned upon load storage devices.

The load monitoring system 10 typically resides on and is executed by one or more computers (e.g., computer 12) that are connected to a network 14 (e.g., the Internet, an intranet, a local area network, a virtual private network, or some other form of network). The instruction sets and subroutines of load monitoring system 10 are typically stored on a storage device 16 connected to computer 12. The storage device 16 may be, for example, a hard disk drive, a tape drive, an optical drive, a RAID array, a random access memory (RAM), or a read-only memory (ROM). A user 18 or 18' typically accesses, administers, and uses load monitoring system 10 through a desktop application 20 or 20' (e.g., Microsoft Internet Explorer^{™}, Netscape Navigator^{™}, or a specialized interface) running on computer 12 or a remote computer 22. The load monitoring system 10 typically includes three modules; a configuration module 24, an event monitoring module 26, and an event analysis 28, each of which will be discussed below in detail.

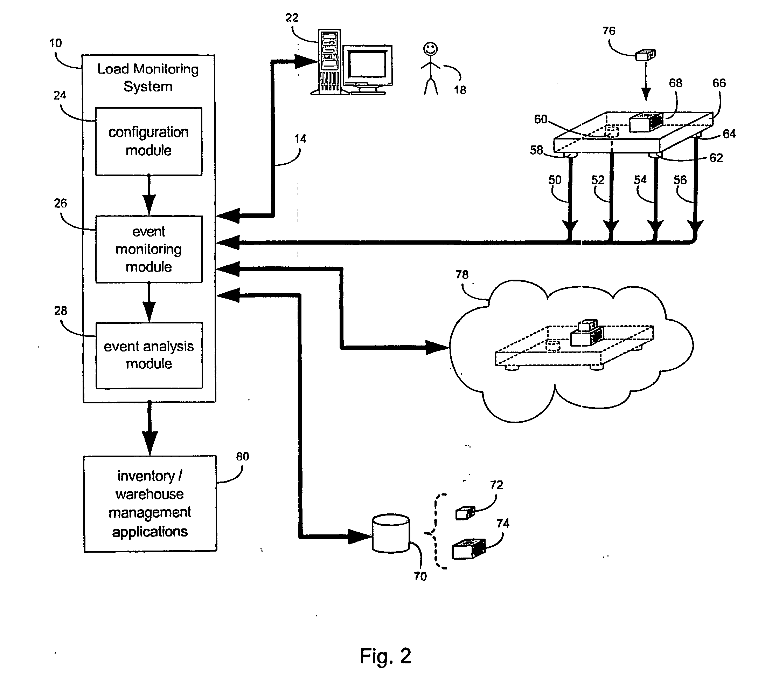

Referring to FIG. 2, the configuration module 24 allows the user 18 to access, administer, and use the load monitoring system 10 via computer 22. The event monitoring module 26 is connected to a load storage device 66 (for example, a pallet, a shelf, a table, a bin, or a shipping container), which is supported on each corner by a load sensor 58, 60, 62, and 64. Each of the load sensors 58, 60, 62, and 64 generates a signal 50, 52, 54, and 56 (respectively) that varies as items are added to or removed from the load 68, or items are repositioned on the load storage device 66.

The load monitoring system 10 communicates with an item database 70, which is accessed by event analysis module 28 and maintained and administered by user 18. The item database 70 contains definitions of the items 72 and 74 that are potentially included in load 68. For example, if load 68 is defined to only include 7.00 kilogram cases of lemons 72 or 10.00 kilogram cases of oranges 74, the definitions stored in database 70 would define the 7.0 kilogram case of lemons 72 and a 10.0 kilogram case of oranges 74. Additional features of the item definitions are discussed below in greater detail.

By comparing the signals 50, 52, 54, and 56 generated by load sensors 58, 60, 62, and 64 before and after the load 68 has experienced a state change (for example, before and after adding differential item 76 to load 68), a net load state change can be determined by event analysis module 28. This net load state change is then compared to the definitions of the items 72 and 74 potentially included in load 68 to determine the identity of the item actually added to or removed from load storage device 66.

Continuing with the above stated example, if the net load state change is an increase of 7.00 kilograms, it is clear that an item was added to load storage device 66. Further, since the only items possibly added to load storage device 66 are 10.00 kilogram cases of oranges (e.g., item 74) or 7.00 kilogram cases of lemons (e.g., item 72), the supplemental item 76 added to load 68 is determined to be, by the event analysis module 28 of load monitoring system 10, a 7.0 kilogram case of lemons.

The event analysis module 28 maintains (in memory) a model 78 of the current state of the load 68 positioned (in the above example) upon load storage device 66. Since event analysis module 28 determined that a 7.00 kilogram case of lemons (e.g., supplemental item 76) was added to the load 68, model 78 is updated to include a case of lemons. This information representing the items included in the load 68 positioned upon load storage device 66 may be communicated to warehouse / inventory management applications 80, such as supply chain management applications, and inventory management applications.

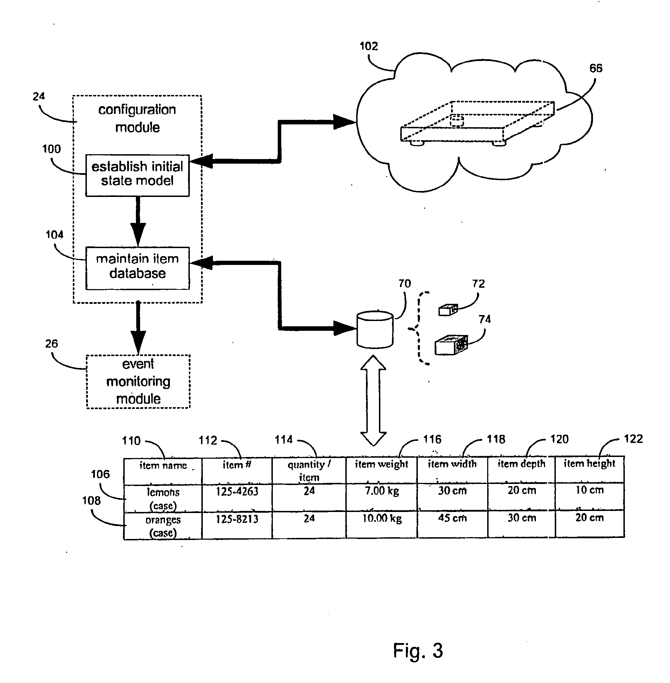

Referring to FIGS. 2 and 3, the configuration module 24 allows the user 18 to establish (100) an initial state model 102 for the particular load storage device 66. Typically, this initial state model is an empty state model that electronically represents an empty load storage device. This state model 102 (i.e., an empty state model) is based on the value of the signals 50, 52, 54, and 56 generated by load sensors 58, 60, 62, and 64. The manner in which these signals are processed are discussed below in greater detail. The load storage device 66 may be any device that can support a load such as, for example, a pallet, a shelf, a bin, a table, or a shipping container.

Whenever load storage device 66 is empty, the only load sensed by the load sensors 58, 60, 62, and 64 is the weight of the load storage device 66 itself. Accordingly, the signals 50, 52, 54, and 56 indicate a lowest load level when the load storage device 66 is empty. Therefore, a state model 102 for an empty load storage device represents the tare weight of the load storage device 66.

For square or rectangular load storage devices, each load sensor 58, 60, 62, 64 may be positioned proximate a corner of load storage device 66. In this case, the weight of the load storage device 66 is typically distributed evenly across each of the load sensors. For example, if the load storage device 66 was a rectangular shelving system having a weight of 100.00 kilograms, each of the load sensors would typically sense a load of 25.00 kilograms. However, if the load storage device is not level, is asymmetrical, or has a non-uniform weight distribution, the loads sensed by each of the load sensors may vary.

As shown, load sensors 58, 60, 62, and 64 are typically positioned between the load storage device 66 and the surface upon which the load storage device rests (i.e., the warehouse floor).

In order to properly model load storage device 66 and the load 68 positioned upon the load storage device 66, the configuration module 24 allows a user to maintain (104) the item database 70 that includes definition records 106 and 108 for each of the items 72 and 74 that may be included in the load 68. These definitions represent the item types that may be included in the load, as opposed to the actual items included in the load. For example, definition 106 corresponds to item 72 (i.e., a 7.00 kilogram case of lemons), and definition 108 corresponds to item 74 (i.e., a 10.00 kilogram case of oranges). For example, the load 68 may include one-hundred cases of lemons and zero cases of oranges, zero cases of lemons and one-hundred cases of oranges, or any mixture of cases of lemons and cases of oranges. If, at a later date, it is possible for cases of pears to be included in load 68, item database 70 may be amended to include a description (not shown) for a case of pears.

Concerning the definition records 106 and 108 specified in item database 70, these definition records represent the physical characteristic of a particular type of item potentially included in the load 68. Accordingly, each definition record includes one or more parameters that define the item, such as: item name 110 (e.g., a name or a description of the item), item number 112 (e.g., a part number or SKU number), quantity per item 114 (e.g., the number of individual pieces of product included in a single item; twenty-four lemons per case), item weight 116, item width 118, item depth 120, and item height 122. The use of item database 70 will be discussed below in greater detail.

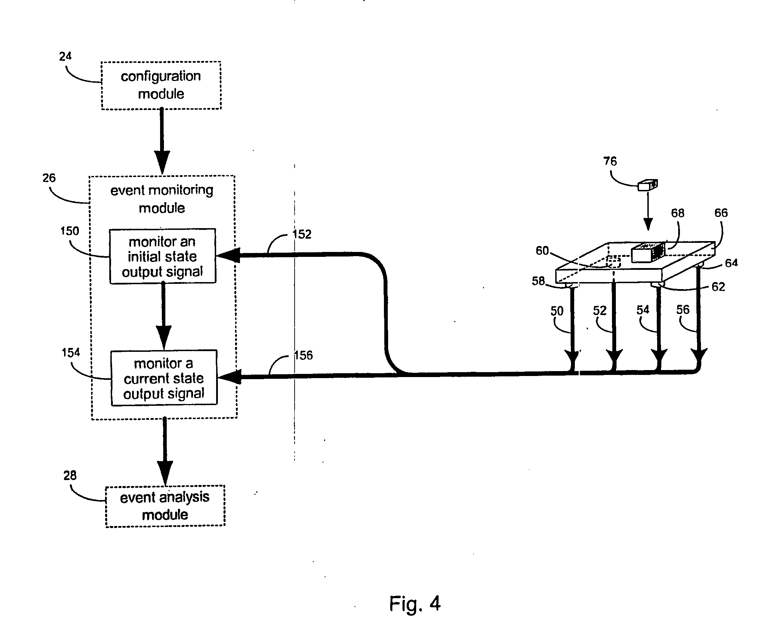

Referring to FIGS. 2 and 4, the event monitoring module 26 monitors the value of the signals 50, 52, 54, and 56 generated by load sensors 58, 60, 62 , and 64. This monitoring of signals may occur on a continuous basis or may occur at defined intervals (e.g., every fifteen seconds).

As stated above, whenever an item (e.g., item 76) is added to or removed from load storage device 66, the signals 50, 52, 54, and 56 generated by load sensors 58, 60, 62, and 64 vary to reflect the change in load. Accordingly, by monitoring (150) an initial state output signal 152 (i.e., the set of signals 50, 52, 54, and 56) generated during an initial state, and monitoring (154) a current state signal 156 (i.e., the set of signals 50, 52, 54, and 56) generated during a current state, a comparison (discussed below) can be made to determine a change in the load (if any) that occurred between the two states (i.e., the point in time at which the first set of measurements were taken and the point in time at which the second set of measurements were taken).

The initial state and the current state may be either an empty state (i.e., a state during which the load storage device 66 does not contain a load), or a loaded state (i.e., a state during which the load storage device contains a load). Depending on the frequency at which the measurements are taken, the initial state and the current may be the same state, in that a change of the load may not always occur between the two measurements. For example, if the event monitoring module 26 monitors the value of signals 50, 52, 54, and 56 every five-hundred milliseconds, then, for a full pallet of merchandise in which one item is removed every sixty seconds, one-hundred-and-twenty consecutive identical readings may occur prior to the load changing.

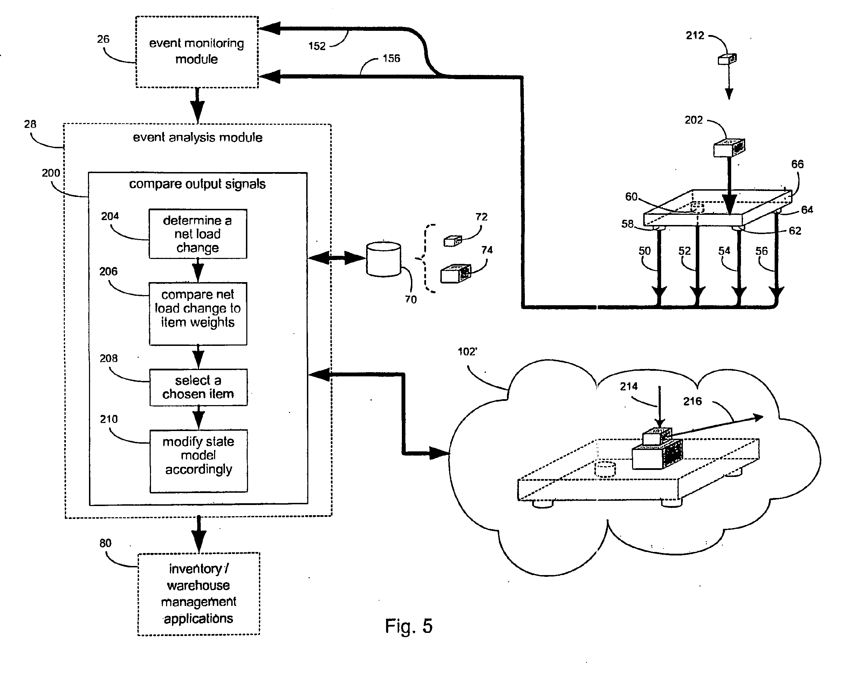

Referring to FIGS. 2 and 5, the event analysis module 28 compares (200) the initial state output signal 152 and the current state output signal 156 to determine any changes in the load 68 positioned upon load storage device 66. As stated above, load sensors 58, 60, 62, and 64 monitor the load 68 positioned upon load storage device 66, and any changes to the load 68 results in a corresponding change in the signals 50, 52, 54, and 56 generated by the load sensors.

Continuing with the above-stated example, if load storage device 66 is a rectangular shelving system having a weight of 100.00 kilograms, then each of the load sensors 58, 60, 62, and 64 senses a load of 25.00 kilograms. This, as discussed above, represents the tare weight of the load storage device 66 and is the basis for the state model 102 for an empty load storage device.

If a 10.00 kilogram case of oranges 202 is added to currently-empty load storage device 66, the signals 50, 52, 54, and 56 generated by load sensors 58, 60, 62, and 64 change. Further, the individual values of these signals vary based on the location of case 202 on the load storage device 66.

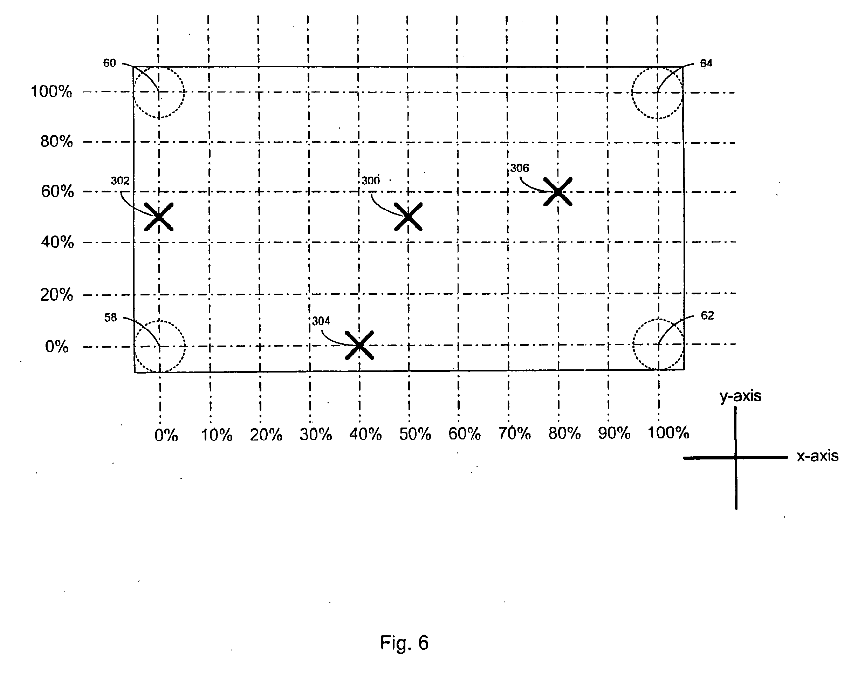

Referring also to FIG. 6 (which represents a top view of load storage device 66), if case 202 is positioned in the geometric center 300 of load storage device 66, the 10.00 kilogram load of case 202 is evenly distributed between all four load sensors 58, 60, 62, and 64. Therefore, each load sensor senses a load of 27.50 kilograms, which represents the 25.00 kilogram tare weight of the load storage device and the 2.50 kilogram load of case 202.

However, altering the position of case 202 on the surface of the load storage device 66 impacts the distribution of the load amongst the sensors. For example, positioning case 202 mid-point between sensors 58 and 60 at location 302 results in sensors 58 and 60 each sensing 50% of the 10.00 kilogram load. Accordingly, sensor 58 senses 30.00 kilograms (i.e., tare weight plus 50% of 10.00 kilograms) sensor 60 senses 30.00 kilograms (i.e., tare weight plus 50% of 10.00 kilograms), sensor 62 senses 25.00 kilograms (i.e., tare weight), and sensor 62 senses 25.00 kilograms (i.e., tare weight).

Location 304 is 40% of the x-axis distance from sensors 58, 60 to sensors 62, 64 and 0% of the y-axis distance from sensors 58, 62 to sensors 60, 64. Therefore, positioning case 202 at location 304 results in the following sensor readings: sensor 58 senses 31.00 kilograms (i.e., tare weight plus 60% of 10.00 kilograms); sensor 60 senses 25.00 kilograms (i.e., tare weight); sensor 62 senses 29.00 kilograms (i.e., tare weight plus 40% of 10.00 kilograms); and sensor 62 senses 25.00 kilograms (i.e., tare weight).

Further, location 306 is 80% of the x-axis distance from sensors 58, 60 to sensors 62, 64, and 60% of the y-axis distance from sensors 58, 62 to sensors 60, 64. Therefore, the combination of sensors 58, 60 are going to sense 20% of the load (i.e., 2.00 kilograms) and combination of sensors 62, 64 are going to sense 80% of the load (i.e., 8.00 kilograms). Further, the combination of sensors 58, 62 are going to sense 40% of the load (i.e., 4.00 kilograms) and the combination of sensors 60, 64 are going to sense 60% of the load (i.e., 6.00 kilograms).

Solving for this system results in the following: sensor 58 senses 25.80 kilograms (i.e., tare weight plus (20%)(40%) of 10.00 kilograms), sensor 60 senses 26.20 kilograms (i.e., tare weight plus (20%)(60%) of 10.00 kilograms); sensor 62 senses 28.20 kilograms (i.e., tare weight plus (80%)(40%) of 10.00 kilograms), and sensor 64 senses 29.80 kilogram (i.e., tare weight plus (80%)(60%) of 10.00 kilograms).

Accordingly, by comparing the initial state output signal 152 (i.e., signals 50, 52, 54, and 56 before a load change) and the current state output signal 156 (i.e., signals 50, 52, 54, and 56 after a load change), a net load change is determined 204. This net load change, which represents the net difference in the weight of the load positioned upon the load storage device 66, is determinable by summing the differences of the loads sensed by the load sensors 58, 60, 62, and 64.

Continuing with the above-stated example, assume that 10.00 kilogram case 202 is positioned at location 300 (i.e., the geometric center of the load storage device 66). Therefore, as stated above, the load sensed by each of the load sensors 58, 60, 62, and 64 changes from 25.00 kilograms to 27.50 kilograms. Accordingly, each of the four load sensors experiences a 2.50 kilogram increase in sensed load, resulting in a net load change of 10.00 kilograms. Further, as illustrated above, by processing the changes of the individuals load signals 50, 52, 54, and 56, load monitoring system 10 determines that case 202 is positioned at location 300 (i.e., the geometric center of load storage device 66).

Referring also to FIG. 3, once the net load change is determined (204), the event analysis module 28 accesses the item database 70 to compare (206) the net load change (i.e., 10.00 kilograms) to the item weight 116 specified in the individual definition records 106 and 108 included in database 70. Since a net load change of 10.00 kilograms matches the weight of the item specified in definition record 108 (i.e., a case of oranges), the event analysis module 28 selects the item 74 that corresponds to definition record 108, namely a 10.00 kilogram case of oranges.

Now that the identity of the item 202 added to the load storage device is known, state model 102 is modified 210 to include item 202, resulting in an up-to-date current model 102'. As the location of the individual items added to or removed from load storage device 66 are known, model 102' identifies not only the identity of the items positioned upon the load storage device 66, but also the location of these items with respect to the load storage device 66.

If a 7.00 kilogram item 212 is stacked on top of item 202, the load sensors 58, 60, 62, and 64 would each sense an additional 1.75 kilograms of load (as item 212 is positioned at the geometric center of load storage device 66). As above, a net load change is determined (204), database 70 is accessed to compare (206) the net load change (i.e., 7.00 kilograms) and the item weight of each item potentially included in the load. If the comparison (206) yields a positive result (i.e., a weight match is found between a weight specified in a definition record and the net load change), a chosen item is selected 208 from the potentially included items (i.e., items 72 and 74). As the net load change is 7.00 kilograms and the definition record 106 specifies that a case of lemons has an item weight of 7.00 kilograms, potential item 72 is selected. Accordingly, state model 102' is modified to add (214) item 212. As model 102' already specifies an item (i.e., item 202) being positioned at location 300 of load storage device 66, model 102' distinguishes between item 202 and item 212 by specifying that item 202 is located on the first layer of items positioned on the load storage device 66, and item 212 is located on the second layer of items positioned on the load storage device 66.

In the event that an item is removed from load storage device 66, the individual load sensors 58, 60, 62, and 64 sense the change in the load. For example, if item 212 was removed from load storage device 66, as item 212 was located on the geometric center of the load storage device 66, each load sensor would register a 1.75 kilogram decrease in load (as item 212 weighs 7.00 kilograms). Accordingly, a net load change would again be determined (204). This time, however, the net load change would be negative. Therefore, once the comparison (206) is made and a chosen item is selected (208), when modifying (210) the state model 102', item 212 is removed 216 from state model 102'. Accordingly, state model 102' now only specifies a single item (i.e., item 202) located at the geometric center of level one of the load storage device 66. This modification of state model 102' repeats itself each time the load 68 positioned upon load storage device 66 changes. Information contained within state model 102' may then be communicated to various warehouse / inventory management applications 80, such as supply chain management applications, and inventory management applications.

While the system is described above as initially starting with an empty load storage device 66, other configurations are possible. For example, the initial state of the load storage device 66 may be a "full" load storage device (e.g., a pallet full of cases of fruit). In this situation, the model initially created for this load storage device 66 would be a model showing the pallet as full (instead of the initial "empty" model described above). Accordingly, each time an item was removed from the pallet, the database would be accessed to determine the identity of the item removed. Once this determination was made, the state model would be modified to remove the reference to the item removed from the pallet.

It should be understood from the above that the above-described implementations, and other implementations, may be used to track loads in three dimensions (i.e., along a z-axis), as well as in two. For example, an implementation may distinguish that three different types of items (each corresponding to an item stored in database 70) are stacked upon each other on a shelf, and may know the order of their stacking by tracking each item as it is added (backup copies of each state model may be continuously or periodically created, so that the system does not have to re-start with the initial state after a system crash). As a result, implementations may make complex determinations about items stored on the shelf, such as determining a number of balls contained within a particular pack of balls that is stored within a left-most and bottom-most positioned box of packs of balls on the shelf.

Accordingly, the implementations may take action such as, for example, sending out an alert when the contents of the shelf are changed in some predetermined way. For example, an alert may be sent when a number of items falls below some threshold, or when a valuable item is removed from the shelf.

Advantageously, the above-described implementations do not require individual tagging of items (as with, for example, Radio Frequency Identification (RFID)) to track the items individually. The implementations do not require any particular type of load-sensing surface (e.g., may be used with metal or wooden shelves, plastic bins, or virtually any other type of surface(s)), and may be used with a wide range of objects and object sizes, within multiple industries and settings.

The system and method described herein may find applicability in any computing or processing environment. The system and method may be implemented in hardware, software, or a combination of the two. For example, the system and method may be implemented using circuitry, such as one or more of programmable logic (e.g., an ASIC), logic gates, a processor, and a memory.

The system and method may be implemented in computer programs executing on programmable computers that each includes a processor and a storage medium readable by the processor (including volatile and non-volatile memory and/or storage elements). Each such program may be implemented in a high-level procedural or object-oriented programming language to communicate with a computer system and method. However, the programs can be implemented in assembly or machine language. The language may be a compiled or an interpreted language.

Each computer program may be stored on an article of manufacture, such as a storage medium (e.g., CD-ROM, hard disk, or magnetic diskette) or device (e.g., computer peripheral), that is readable by a general or special purpose programmable computer for configuring and operating the computer when the storage medium or device is read by the computer to perform the functions of the data framer interface. The system and method also may be implemented as a machine-readable storage medium, configured with a computer program, where, upon execution, instructions in the computer program cause a machine to operate to perform the functions of the system and method described above.

Implementations of the system and method may be used in a variety of applications. Although the system and method is not limited in this respect, the system and method may be implemented with memory devices in microcontrollers, general-purpose microprocessors, digital signal processors (DSPs), reduced instruction-set computing (RISC), and complex instruction-set computing (CISC), among other electronic components.

Implementations of the system and method may also use integrated circuit blocks referred to as main memory, cache memory, or other types of memory that store electronic instructions to be executed by a microprocessor or store data that may be used in arithmetic operations.

Additionally, implementations of the system and method described above need not be performed by a computer and/or computing device and may be performed manually. A number of implementations have been described. Nevertheless, it will be understood that various modifications may be made. Accordingly, other implementations are within the scope of the following claims.

## Claims

1. A method of monitoring of loads (68, 76, 202, 212) on a load storage device (66) in a current state model which defines the loads (68, 76, 202, 212) positioned upon the load storage device (66) comprising:
maintaining (104) an item database (70) that includes a definition for one or more items potentially included in the load (68, 76, 202, 212) positioned upon the load storage device,
wherein the definition of each item includes one or more parameters that define the item;
monitoring (150) initial state load signals generated by a plurality of load sensors (58, 60, 62, 64) positioned at a load storage device (66);
monitoring (154) current state load signals generated by the plurality of load sensors (58, 60, 62, 64); and
comparing the initial and current state load signals to determine (204)changes in a load (68, 76, 202, 212) positioned upon the load storage device (66);determining an identity of an item corresponding to the change in the load based in the item database (70);
determining a position of the load (68, 76, 202, 212), relative to the surface in three dimensions, based on the load signals;
to generate an updated current state model, modifying (210) the current state model pursuant to changes in the load (68, 76, 202, 212) positioned upon the load storage device (66) with the determined identity of the item and the position of the load (68, 76, 202, 212).

2. The method of claim 1 comprising establishing, as an initial state model, an empty state model for the load storage device (66) during an empty state in which the load storage device (66) does not contain any load (68, 76, 202, 212).

3. The method of claim 1 wherein comparing the initial and current state load signals includes determining (204) a net load change in the load (68, 76, 202, 212) positioned upon the load storage device.

4. The method of claim 3 wherein comparing the initial and current state load signals further includes comparing the determined net load change to an item weight of one or more items potentially included in the load (68, 76, 202, 212).

5. The method of claim 4 wherein comparing the initial and current state load signals further includes selecting, from the one or more items potentially included in the load, a chosen item that corresponds to the determined net load change.

6. A computer program product residing on a computer readable medium having a plurality of instructions stored thereon which, when executed by the processor, cause that processor to perform the method according to one of the claims 1 to 5.

7. A system for monitoring of loads on a load storage device (66) in a current state model which defines the load (68, 76, 202, 212) positioned upon the load storage device (66) comprising:
a plurality of load sensors (58, 60, 62, 64) positioned to measure a load (68, 76, 202, 212) on a load storage device (66) and for outputting load signals corresponding to the load (68, 76, 202, 212);
a database (70) for storing a plurality of load records, each load record corresponding to an item type; and
a load monitoring system (10) for receiving the load signals and for accessing the database (70); the load monitoring system (10) is further adapted to
monitor initial state load signals generated by the plurality of load sensors (58, 60, 62, 64) positioned at the load storage device (66);
monitor current state load signals generated by the plurality of load sensors(58, 60, 62, 64);
compare the initial and current state load signals to determine changes in a load positioned upon the load storage device (66);
determine an identity of an item corresponding to the change in the load (68, 76, 202, 212) based in the item database (70);
determine a position of the load (68, 76, 202, 212), relative to the surface in three dimensions, based on the load signals; and
for generating an updated current state model, modify the current state model pursuant to changes in the load (68, 76, 202, 212) positioned upon the load storage device (66) with the determined identity of the item and the determined position of the load (68, 76, 202, 212)..

8. The system of claim 7 wherein the load monitoring system (10) is further recognizes an event associated with the load (68, 76, 202, 212), including an addition to, removal from, or movement on the surface of the load (68, 76, 202, 212).

9. The system of claim 7 wherein the load monitoring system (10) further determines dimensions of the load (68, 76, 202, 212).

10. The system of claim 7 wherein the load storage device (66) is generally rectangular in shape and the load sensors (58, 60, 62, 64) are positioned proximate each corner of the load storage device (66).

11. The system of claim 7 wherein the load sensors (58, 60, 62, 64) are positioned between the load storage device (66) and the surface upon which the load storage device (66) rests.

## Patentansprüche

1. Verfahren zur Überwachung von Frachten (68, 76, 202, 212) auf einer Frachtlagervorrichtung (66) in einem Ist-Zustandsmodell, welches die auf der Frachtlagervorrichtung (66) positionierten Frachten (68, 76, 202, 212) definiert, umfassend:
Pflegen (104) einer Warendatenbank (70), die eine Definition für eine oder mehrere Waren enthält, die potenziell in der auf der Frachtlagervorrichtung positionierten Fracht (68, 76, 202, 212) enthalten sind,
wobei die Definition von jeder Ware einen oder mehrere Parameter, die die Ware definieren, enthält;
Überwachen (150) von Anfangszustandsfrachtsignalen, erzeugt durch eine Vielzahl von Frachtsensoren (58, 60, 62, 64), die bei einer Frachtlagervorrichtung (66) positioniert sind;
Überwachen (154) von Ist-Zustandsfrachtsignalen, erzeugt durch die Vielzahl von Frachtsensoren (58, 60, 62, 64); und
Vergleichen von Anfangs- und Ist-Zustandsfrachtsignalen zur Ermittlung (204) von Änderungen in einer auf der Frachtlagervorrichtung (66) positionierten Fracht (68, 76, 202, 212); Ermittlung einer Identität einer Ware entsprechend der Änderung der Fracht, basierend auf der Warendatenbank (70);
Ermittlung, basierend auf den Frachtsignalen, einer Position der Fracht (68, 76, 202, 212) bezüglich der Fläche in drei Dimensionen;
zur Erzeugung eines aktualisierten Ist-Zustandsmodells, Modifizieren (210) des Ist-Zustandmodells gemäß den Änderungen in der auf der Frachtlagervorrichtung (66) positionierten Fracht (68, 76, 202, 212) mit der ermittelten Identität der Ware und der Position der Fracht (68, 76, 202, 212).

2. Verfahren nach Anspruch 1, umfassend Aufstellen, als ein Anfangszustandsmodell, eines Leerzustandsmodells für die Frachtlagervorrichtung (66) während eines Leerzustands, bei dem die Frachtlagervorrichtung (66) keine Fracht (68, 76, 202, 212) enthält.

3. Verfahren nach Anspruch 1, wobei Vergleichen der Anfangs- und ist-Zustandsfrachtsignale Ermitteln (204) einer Nettofrachtänderung in der auf der Frachtlagervorrichtung positionierten Fracht (68, 76, 202, 212) einschließt.

4. Verfahren nach Anspruch 3, wobei Vergleichen der Anfangs- und Ist-Zustandsfrachtsignale außerdem Vergleichen der ermittelten Nettofrachtänderung zu einem Warengewicht von einer oder mehreren Waren, die potenziell in der Fracht (68, 76, 202, 212) enthalten ist/sind, einschließt.

5. Verfahren nach Anspruch 4, wobei Vergleichen der Anfangs- und Ist-Zustandsfrachtsignale außerdem Auswahl, aus der einen oder mehreren potenziell in der Fracht enthaltenen Ware(n), einer gewählten Ware, die der ermittelten Nettofrachtänderung entspricht, einschließt.

6. Computerprogrammprodukt, gespeichert auf einem computerlesbaren Medium mit einer Vielzahl von Anweisungen darauf gespeichert, welche, wenn durch den Prozessor ausgeführt, den Prozessor veranlassen, das Verfahren nach einem der Ansprüche 1 bis 5 auszuführen.

7. System zum Überwachen von Frachten auf einer Frachtlagervorrichtung (66) in einem Ist-Zustandsmodell, welches die auf der Frachtlagervorrichtung (66) positionierte Fracht (68, 76, 202, 212) definiert, mit:
einer Vielzahl von Frachtsensoren (58, 60, 62, 64), positioniert zum Messen einer Fracht (68, 76, 202, 212) auf einer Frachtlagervorrichtung (66) und zur Ausgabe von Frachtsignalen entsprechend der Fracht (68, 76, 202, 212);
einer Datenbank (70) zum Speichern einer Vielzahl von Frachtdatensätzen, wobei jeder Frachtdatensatz einem Warentyp entspricht; und
einem Frachtüberwachungssystem (10) zum Empfang von Frachtsignalen und zum Zugriff auf die Datenbank (70); wobei das Frachtüberwachungssystem (10) außerdem angepasst ist
zum Überwachen von Anfangszustandsfrachtsignalen, erzeugt durch die Vielzahl von bei der Frachtlagervorrichtung (66) angeordneten Frachtsensoren (58, 60, 62, 64);
Überwachen von Ist-Zustandsfrachtsignalen, erzeugt durch die Vielzahl von Frachtsensoren (58, 60, 62, 64);
Vergleichen von Anfangs- und Ist-Zustandsfrachtsignalen zur Ermittlung von Änderungen in einer auf der Frachtlagervorrichtung (66) positionierten Fracht;
Ermitteln einer Identität einer Ware entsprechend der Änderung in der Fracht (68, 76, 202, 212), basierend auf einer Warendatenbank (70);
Ermittlung einer Position der Fracht (68, 76, 202, 212) in Bezug auf die Fläche in drei Dimensionen, basierend auf den Frachtsignalen; und
zum Erzeugen eines aktualisierten Ist-Zustandmodells, Modifizieren des Ist-Zustandsmodells gemäß den Änderungen in der auf der Frachtlagervorrichtung (66) positionierten Fracht (68, 76, 202, 212) mit der ermittelten Identität der Ware und der ermittelten Position der Fracht (68, 76, 202, 212).

8. System nach Anspruch 7, wobei das Frachtüberwachungssystem (10) außerdem ein Ereignis erkennt, zugeordnet zu der Fracht (68, 76, 202, 212), einschließlich einer Zugabe zu, Entfernung von oder Bewegung auf der Fläche der Fracht (68, 76, 202, 212).

9. System nach Anspruch 7, wobei das Frachtüberwachungssystem (10) außerdem die Abmessungen der Fracht (68, 76, 202, 212) ermittelt.

10. System nach Anspruch 7, wobei das Frachtlager (66) im Allgemeinen eine rechteckige Form aufweist und die Frachtsensoren (58, 60, 62, 64) in der Nähe von jeder Ecke der Frachtlagervorrichtung (66) angeordnet sind.

11. System nach Anspruch 7, wobei die Frachtsensoren (58, 60, 62, 64) zwischen der Frachtlagervorrichtung (66) und der Fläche, auf der die Frachtlagervorrichtung (66) ruht, positioniert sind.

## Revendications

1. Procédé pour le contrôle de charges (68, 76, 202, 212) sur un dispositif de stockage de charge (66) dans un modèle d'état courant qui définit les charges (68, 76, 202, 212) positionnées sur le dispositif de stockage de charge (66) comportant :
la maintenance (104) d'une base de données d'articles (70) qui inclut une définition pour un ou plusieurs articles potentiellement inclus dans la charge (68, 76, 202, 212) positionnée sur le dispositif de stockage de charge,
dans lequel la définition de chaque article inclut un ou plusieurs paramètres qui définissent l'article,
le contrôle (150) de signaux de charge d'état initial générés par une pluralité de capteurs de charge (58, 60, 62, 64) positionnés sur un dispositif de stockage de charge (66),
le contrôle (154) de signaux de charge d'état courant générés par la pluralité de capteurs de charge (58, 60, 62, 64), et
la comparaison des signaux de charge d'états initial et courant pour déterminer (204) des changements dans une charge (68, 76, 202, 212) positionnée sur le dispositif de stockage de charge (66) ; la détermination d'une identité d'un article correspondant au changement dans la charge d'après la base de données d'articles (70),
la détermination d'une position de la charge (68, 76, 202, 212), par rapport à la surface en trois dimensions, d'après les signaux de charge,
pour générer un modèle d'état courant mis à jour, la modification (210) du modèle d'état courant se rapportant à des changements dans la charge (68, 76, 202, 212) positionnée sur le dispositif de stockage de charge (66) avec l'identité déterminée de l'article et la position de la charge (68, 76, 202, 212).

2. Procédé selon la revendication 1, comportant l'établissement, en tant que modèle d'état initial, d'un modèle d'état vide pour le dispositif de stockage de charge (66) durant un état vide dans lequel le dispositif de stockage de charge (66) ne contient aucune charge (68, 76, 202, 212).

3. Procédé selon la revendication 1, dans lequel la comparaison des signaux de charge d'états initial et courant inclut la détermination (204) d'un changement de charge nette dans la charge (68, 76, 202, 212) positionnée sur le dispositif de stockage de charge.

4. Procédé selon la revendication 3, dans lequel la comparaison des signaux de charge d'états initial et courant inclut de plus la comparaison du changement de charge nette déterminé à un poids d'article d'un ou de plusieurs articles potentiellement inclus dans la charge (68, 76, 202, 212).

5. Procédé selon la revendication 4, dans lequel la comparaison des signaux de charge d'états initial et courant inclut de plus la sélection, parmi un ou plusieurs articles potentiellement inclus dans la charge, d'un article voulu qui correspond au changement de charge nette déterminé.

6. Produit de programme informatique résidant sur un support lisible par ordinateur sur lequel sont stockées une pluralité d'instructions qui, lorsque exécutées par le processeur, amènent ce processeur à exécuter le procédé selon l'une quelconque des revendications 1 à 5.

7. Système pour le contrôle de charges sur un dispositif de stockage de charge (66) dans un modèle d'état courant qui définit la charge (68, 76, 202, 212) positionnée sur le dispositif de stockage de charge (66) comportant **:**
une pluralité de capteurs de charge (58, 60, 62, 64) positionnés pour mesurer une charge (68, 76, 202, 212) sur un dispositif de stockage de charge (66) et pour délivrer en sortie des signaux de charge correspondant à la charge (68, 76, 202, 212),
une base de données (70) pour mémoriser une pluralité d'enregistrements de charge, chaque enregistrement de charge correspondant à un type d'article, et
un système de contrôle de charge (10) pour recevoir les signaux de charge et pour accéder à la base de données (70) ; le système de contrôle de charge (10) étant de plus adapté pour :
contrôler des signaux de charge d'état initial générés par la pluralité de capteurs de charge (58, 60, 62, 64) positionnés sur le dispositif de stockage de charge (66),
contrôler des signaux de charge d'état courant générés par la pluralité de capteurs de charge (58, 60, 62, 64),
comparer les signaux de charge d'états initial et courant pour déterminer des changements dans une charge positionnée sur le dispositif de stockage de charge (66),
déterminer une identité d'un article correspondant au changement dans la charge (68, 76, 202, 212) basée dans la base de données d'articles (70),
déterminer une position de la charge (68, 76, 202, 212), par rapport à la surface en trois dimensions, sur la base des signaux de charge, et
pour générer un modèle d'état courant mis à jour, modifier le modèle d'état courant relatif à des changements dans la charge (68, 76, 202, 212) positionnée sur le dispositif de stockage de charge (66) avec l'identité déterminée de l'article et la position déterminée de la charge (68, 76, 202, 212).

8. Système selon la revendication 7, dans lequel le système de contrôle de charge (10) reconnaît de plus un événement associé à la charge (68, 76, 202, 212), incluant un ajout à la surface de la charge (68, 76, 202, 212), un retrait de celle-ci, ou un mouvement sur celle-ci.

9. Système selon la revendication 7, dans lequel le système de contrôle de charges (10) détermine de plus des dimensions de la charge (68, 76, 202, 212).

10. Système selon la revendication 7, dans lequel le dispositif de stockage de charge (66) est généralement de forme rectangulaire et les capteurs de charge (58, 60, 62, 64) sont positionnés à proximité de chaque coin du dispositif de stockage de charge (66).

11. Système selon la revendication 7, dans lequel les capteurs de charge (58, 60, 62, 64) sont positionnés entre le dispositif de stockage de charge (66) et la surface sur laquelle repose le dispositif de stockage de charge (66).
